# EUROPÄISCHE PATENTSCHRIFT

(11) **EP 3 150 522 B1**
(45) Veröffentlichungstag und Bekanntmachung des Hinweises auf die Patenterteilung: **20.06.2018**
(21) Anmeldenummer: 16190376.0
(22) Anmeldetag: 23.09.2016
(51) Int. Cl.: B65G 65/00

(54) **VORRICHTUNG ZUR LASTÜBERGABE**
DEVICE FOR LOAD TRANSFER
DISPOSITIF DE TRANSFERT DE CHARGE

(30) Priorität: 01.10.2015 DE 202015105184 U
(43) Veröffentlichungstag der Anmeldung: 05.04.2017
(73) Patentinhaber: LR Intralogistik GmbH, 84109 Wörth a. d. Isar (DE)
(72) Erfinder: Berghammer, Fritz, 84028 Landshut (DE)
(74) Vertreter: Patentship Patentanwaltsgesellschaft mbH

(56) Entgegenhaltungen:
- WO-A1-89/03802
- JP-A- H04 265 602
- SU-A1- 1 740 210
- US-A- 4 944 357
- US-A- 5 664 929

## Beschreibung

Die Erfindung betrifft eine Vorrichtung, umfassend eine ortsfeste Übernahmestation und ein Fahrzeug, das einen Hubtisch umfasst, zur Übergabe von Lasten von dem Hubtisch des Fahrzeugs in die ortsfeste Übernahmestation nach dem Oberbegriff des Anspruchs 1.
Für den werksinternen Transport von Lasten, beispielsweise Paletten oder Gitterboxen zur Aufnahme von Ladungen, werden in zunehmendem Maß Trailerzüge eingesetzt, deren Anhänger von einem Zugfahrzeug zu den gewünschten Stationen verfahren werden. Beispiele für die dabei eingesetzten Anhänger sind in DE 20 2013 102 199 beschrieben und dargestellt und können in Draufsicht E-förmige oder C-förmige Tragrahmen haben, die insgesamt oder partiell mit einem Huborgan verbunden sind. Um eine vereinfachte Be- und Entladung zu ermöglichen, die ohne Muskelkraft auskommt und die Bedienungsperson weitestgehend entlastet, hat der Trailerzuganhänger einen integrierten Stetigförderer, der von einem Motor angetrieben wird. Dessen Stromversorgung wird von einer Batterie übernommen, die in dem Fahrzeug untergebracht ist und eine verhältnismäßig hohe Kapazität haben muss, um über einen längeren Zeitraum eine Vielzahl von Be- und Entladevorgängen für die häufig sehr schweren Lasten durchführen zu können, ohne dass die Batterie zu rasch entlädt. In den Umschlagpositionen muss dafür gesorgt werden, dass der Anhänger in einer vorbestimmten Stellung relativ zu der ortsfesten Übernahmestation ausgerichtet ist, was in dem bekannten System manuell und auf Sicht erfolgt. Die WO 89/03802 A1 offenbart eine Vorrichtung zur Übergabe von Lasten von einem Hubtisch eines Fahrzeugs in eine ortsfeste Übernahmestation nach dem Oberbegriff des Anspruchs 1, wobei auf dem Hubtisch ein von einem Motor angetriebener Stetigförderer zur Aufnahme der Last angeordnet ist und der Hubtisch mittels eines Huborgans relativ zum Fahrwerk des Fahrzeugs höhenverstellbar ist.
Der Erfindung liegt die Aufgabe zugrunde, eine Vorrichtung zur Lastübergabe zur Verfügung zu stellen, die so ausgebildet ist, dass nach Erreichen einer vorbestimmten Umschlagposition, die automatisch kontrolliert werden kann, die Stromversorgung für den Motor des Stetigförderers unabhängig von einer fahrzeugeigenen Batterie übernommen werden kann.

Die Lösung dieser Aufgabe ergibt sich aus den Merkmalen des Anspruchs 1, wonach in der Übernahmestation eine Sensoreinrichtung eine vorbestimmte Umschlagposition des Fahrzeugs erkennt, so dass manuelle Positionskorrekturen des Fahrzeugs möglich sind. In der dann erreichten Umschlagposition des Fahrzeugs wird der Hubtisch höhengleich zu der ortsfesten Übernahmestation abgesenkt, bis ein Schalter einen Stromkreis zur Spannungsversorgung des Motors schließt und dieser unabhängig von der fahrzeugeigenen Batterie angetrieben wird. Der Schalter besteht dabei aus wenigstens einem stromführenden Kontakt, der beispielsweise an einer ortsfesten Schiene angebracht sein kann, und einem Schaltkontakt am Hubtisch, der beim Absenken in Berührung mit dem stromführenden Kontakt kommt.

In vorteilhafter Weiterbildung der Erfindung sind in der Übernahmestation zwei horizontal voneinander beabstandete Kontakte angebracht, die zur Drehrichtungsumkehr des Motors umpolbar sind, so dass der Stetigförderer des Hubtisches entweder den Entladevorgang oder in umgekehrter Richtung den Beladevorgang ausführt.

Nach einem Merkmal der Erfindung besteht der von dem Motor angetriebene Stetigförderer aus einem Bandförderer oder einer angetriebenen Rollenbahn, so dass die jeweilige Last, beispielsweise eine Gitterbox, quer zur Fahrtrichtung des Fahrzeugs, beispielsweise des Trailerzuganhängers, bewegt werden kann.

Die Erfindung ist nachstehend an einem Ausführungsbeispiel erläutert, das in der Zeichnung dargestellt ist. Es zeigen:
- Fig. 1: eine schematische Frontalansicht einer Vorrichtung gemäß der Erfindung,

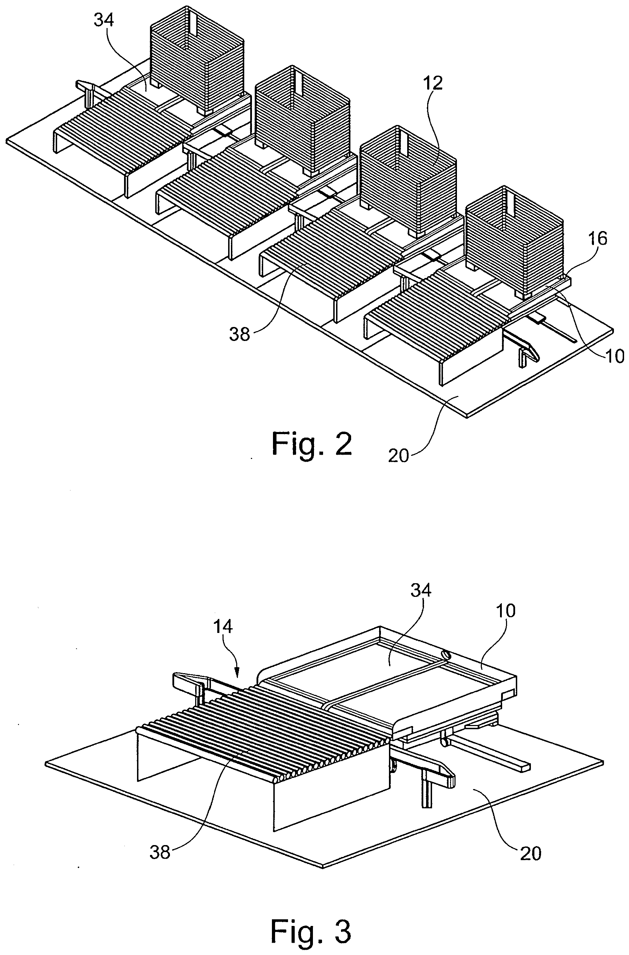

- Fig. 2: die perspektivische Schrägansicht einer Anlage mit hier vier hintereinander angeordneten Übergabevorrichtungen,
- Fig. 3: in vergrößerter Darstellung eine Übergabevorrichtung ohne Last,
- Fig. 4: in vergrößerter Ansicht einen Teil eines Fahrzeugs in der Umschlagposition bei geöffneten Schaltern und
- Fig. 5: eine der Fig. 4 entsprechende Darstellung mit geschlossenen Schaltern.

Die in den Figuren dargestellte Vorrichtung wird am Beispiel eines Trailerzuganhängers 10 erläutert, ohne dass sie auf diesen Anwendungsfall beschränkt ist. Sie kann auch in anderen Situationen eingesetzt werden, in denen unabhängig von einem Trailerzuganhänger 10 eine Last 12 in x-Richtung auf eine ortsfeste Übernahmestation 14 überführt oder von dieser in entgegengesetzter Richtung -x abgegeben werden soll.

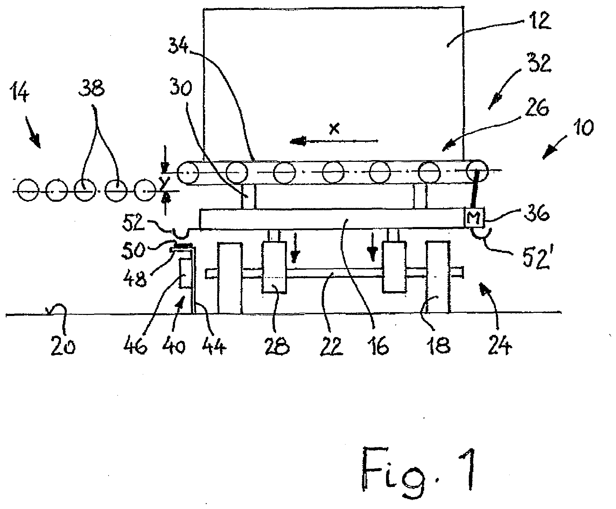

Wie das Beispiel der Fig. 1 zeigt, hat der Trailerzuganhänger 10 einen Tragrahmen 16, der nach dem Beispiel von EP 2 161 182 B1 in Draufsicht E-förmig oder nach der aus DE 20 2009 001 933 U1 C-förmig gestaltet sein kann.

Der Tragrahmen 16 ist auf Rädern 18 auf dem Boden 20 beispielsweise einer Werkshalle verfahrbar, wobei die beiden Räder 18 zusammen mit einer Starrachse 22 Teil des Fahrwerks 24 des Anhängers 10 sind.

Wie aus Fig. 1 hervorgeht, ist der Tragrahmen 16 in bekannter Weise als Hubtisch 26 ausgebildet, der mittels wenigstens eines Huborgans 28 relativ zum Fahrwerk 24 angehoben und abgesenkt werden kann.

Auf dem Tragrahmen 16 ist über Stützen 30 ein Stetigförderer 32 angebracht, der im Beispiel der Fig. 1 als Bandförderer 34 ausgebildet ist, der von einem Motor 36 angetrieben wird. Über die Huborgane 28 kann der Hubtisch 26 und mit diesem der Bandförderer 34 in vertikaler Richtung y auf die Höhe der Übernahmestation 14 abgesenkt werden, in der hier ein angetriebener Rollenförderer 38 vorgesehen ist.

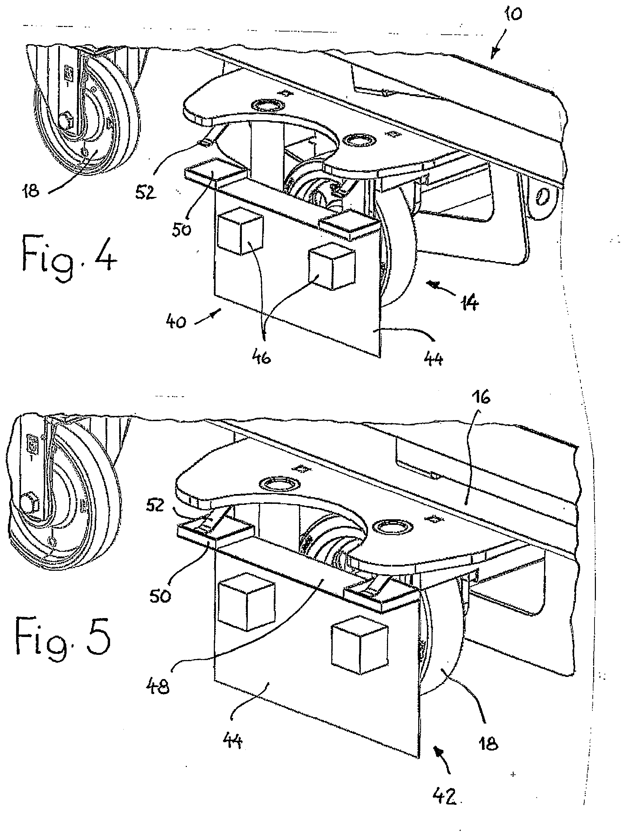

In der Übernahmestation 14 ist, wie das Beispiel der Fig. 4 und Fig. 5 zeigt, eine ortsfeste Schiene 40 angebracht, die aus einem winkelförmigen Träger 42 besteht. An der vertikalen Wand 44 des Trägers 42 sind zwei horizontal voneinander beabstandete Sensoren 46 gehalten, die in einer vorbestimmten Umschlagposition des Trailerzuganhängers 10 über nicht sichtbare Gegensensoren die exakte Umschlagposition des Anhängers 10 erfassen, in der der Stetigförderer 32 zu dem Rollenförderer 38 ausgerichtet sein muss.

Auf dem horizontalen Schenkel 48 des Trägers 42 sind mit Abstand voneinander zwei stromführende Kontakte 50 befestigt, über denen zwei entsprechende Schaltkontakte 52 am Tragrahmen 16 befestigt sind.

Wenn der Trailerzuganhänger 10 in der in Fig. 4 gezeigten Übernahmestation 14 angekommen ist, stellen die beiden Sensoren 46 die Position des Anhängers 10 fest, die noch korrigiert werden kann, bis die vorbestimmte Umschlagposition des Fahrzeugs relativ zu der ortsfesten Übernahmestation 14 mit ihrem Rollenförderer 38 erreicht ist. Durch einen fahrzeugseitigen Befehl, der beispielsweise von einem Fahrer des Zugfahrzeuges oder automatisch abgegeben wird, erhalten die Huborgane 28 ein Signal zum Absenken des Hubtisches 26, so dass beiden Schaltkontakte 52 in Berührung mit den stromführenden Kontakten 50 kommen. Nach einer kurzen Verzögerung von etwa einer halben Sekunde, die eine Lichtbogenbildung vermeiden soll, wird der Kontakt 50 mit Strom versorgt, so dass der Stromkreis zur Spannungsversorgung des Motors 36 geschlossen wird, der dadurch von den nicht dargestellten Batterien des Fahrzeugs 10 abgekoppelt ist. Mittels des Motors 36 wird nun der Bandförderer 34 in Richtung x (vgl. Fig. 1) angetrieben, wodurch die Last 12 höhengleich (y = 0) auf den Rollenförderer 38 überführt werden kann.

Wenn die Sensoren 46 eine von der exakten Umschlagposition des Fahrzeugs 10 abweichende Fehlstellung feststellen, bleibt der Kontakt 50 stromlos, so dass die Spannungsversorgung des Motors 36 unterbrochen bleibt.

Zum Beladen des Trailerzuganhängers 10 läuft dieser Vorgang in umgekehrter Richtung ab; hierzu erfolgt eine Drehrichtungsumkehr des Motors 16 durch Umpolung der stromführenden Kontakte 50, so dass der Bandförderer 34 in der entgegengesetzten Richtung -x angetrieben wird.

In Fig. 1 ist angedeutet, dass der Tragrahmen 16 auch an der gegenüberliegenden Längsseite einen Schaltkontakt 52' hat, so dass die erläuterte Lastübergabe oder Lastübernahme auch durchgeführt werden kann, wenn das Fahrzeug 10 in umgekehrter Stellung in die Übernahmestation 14 eingefahren ist.

## Patentansprüche

1. Vorrichtung, umfassend eine ortsfeste Übernahmestation (14) und ein Fahrzeug (10), das einen Hubtisch (26) umfasst, zur Übergabe von Lasten (12) von dem Hubtisch (26) des Fahrzeugs (10) in die ortsfeste Übernahmestation (14), wobei auf dem Hubtisch (26) ein von einem Motor (36) angetriebener Stetigförderer (32) zur Aufnahme der Last (12) angeordnet und der Hubtisch (26) mittels eines Huborgans (28) relativ zum Fahrwerk (24) des Fahrzeugs (10) höhenverstellbar ist,
**dadurch gekennzeichnet,**
**dass** in der Übernahmestation (14) eine Sensoreinrichtung (46) zum Erkennen einer vorbestimmten Umschlagposition des Fahrzeugs (10) und wenigstens ein stromführender Kontakt (50) vorgesehen sind, an dem in der vorbestimmten Umschlagposition beim Absenken des Hubtisches (26) in eine Übergabestellung ein Schaltkontakt (52) des Hubtisches (26) anschlägt und dadurch einen Stromkreis zur Spannungsversorgung des Motors (36) schließt.

2. Vorrichtung nach Anspruch 1,
**dadurch gekennzeichnet,**
**dass** die Sensoreinrichtung (46) an einer ortsfesten Schiene (40) angebracht ist, die auch den stromführende Kontakt (50) trägt.

3. Vorrichtung nach Anspruch 1 oder 2,
**dadurch gekennzeichnet,**
**dass** in der Übernahmestation zwei horizontal voneinander beabstandete Kontakte (50) angebracht sind, die zur Drehrichtungsumkehr des Motors (36) umpolbar sind.

4. Vorrichtung nach einem der vorhergehenden Ansprüche,
**dadurch gekennzeichnet,**
**dass** der von dem Motor (36) angetriebene Stetigförderer (32) ein Bandförderer (34) ist, der in seiner abgesenkten Übergabestellung höhengleich zu einem Rollenförderer (38) der ortsfesten Übernahmestation (14) ausgerichtet ist.

5. Vorrichtung nach einem der vorhergehenden Ansprüche,
**dadurch gekennzeichnet,**
**dass** das Fahrzeug (10) ein Trailerzuganhänger ist.

6. Vorrichtung nach Anspruch 5,
**dadurch gekennzeichnet,**
**dass** der Trailerzuganhänger (10) einen den Hubtisch (26) bildenden oder diesen aufnehmenden Tragrahmen (16) hat.

## Claims

1. Device comprising a stationary transfer station (14) and a vehicle (10) which comprises a lifting table (26), for transferring loads (12) from the lifting table (26) of the vehicle (10) into the stationary transfer station (14), a continuous conveyor (32) driven by a motor (36) being arranged on the lifting table (26) to receive the load (12), and the lifting table (26) being adjustable vertically relative to the chassis (24) of the vehicle (10) by means of a lifting member (28) ,
**characterized in that**
a sensor device (46) for detecting a predetermined handling position of the vehicle (10) and at least one current-carrying contact (50) are provided in the transfer station (14), the said contact being struck by a switching contact (52) of the lifting table (26) in the predetermined handling position as the lifting table (26) is lowered into a transfer position, which switching contact, as a result, closes a circuit for the power supply of the motor (36).

2. Device according to Claim 1,
**characterized in that**
the sensor device (46) is fitted to a stationary rail (40), which also carries the current-carrying contact (50).

3. Device according to Claim 1 or 2,
**characterized in that**
two contacts (50) spaced apart from each other horizontally, the polarity of which can be reversed in order to reverse the direction of rotation of the motor (36), are fitted in the transfer station.

4. Device according to one of the preceding claims,
**characterized in that**
the continuous conveyor (32) driven by the motor (36) is a belt conveyor (34) which, in its lowered transfer position, is aligned at the same height as a roller conveyor (38) of the stationary transfer station (14).

5. Device according to one of the preceding claims,
**characterized in that**
the vehicle (10) is a trailer-train trailer.

6. Device according to Claim 5,
**characterized in that**
the trailer-train trailer (10) has a load-bearing frame (16) forming or receiving the lifting table (26).

## Revendications

1. Ensemble comprenant un poste fixe de transfert (14) et un véhicule (10) qui comporte une table de levage (26), en vue du transfert de charges (12) de la table de levage (26) du véhicule (10) au poste fixe de transfert (14),
un transporteur permanent (32) entraîné par un moteur (36) étant disposé sur la table de levage (26) pour reprendre la charge (12) et la table de levage (26) pouvant être ajustée en hauteur par rapport au train de roulement (24) du véhicule (10) au moyen d'un organe de levage (28),
**caractérisé en ce que**
un dispositif de capteur (46) destiné à détecter une position prédéterminée de transbordement du véhicule (10) est prévu sur le poste de transfert (14), de même qu'au moins un contact (50) conduisant le courant sur lequel un contact de commutation (52) de la table de levage (26) vient buter dans la position prédéterminée de transbordement lorsque la table de levage (26) est abaissée dans une position de transfert, pour ainsi fermer un circuit de courant qui alimente en tension le moteur (36).

2. Ensemble selon la revendication 1, **caractérisé en ce que** le dispositif de capteur (46) est placé sur un rail fixe (40) qui porte également le contact (50) conduisant le courant.

3. Ensemble selon les revendications 1 ou 2,
**caractérisé en ce que** deux contacts (50) disposés à distance horizontale l'un de l'autre sont placés dans le poste de transfert et peuvent être inversés pour inverser le sens de rotation du moteur (36).

4. Ensemble selon l'une des revendications précédentes, **caractérisé en ce que** le transporteur permanent (32) entraîné par le moteur (36) est un transporteur à bande (34) qui est aligné à même hauteur qu'un transporteur à rouleaux (38) du poste fixe de transfert (14) dans sa position de transfert abaissée.

5. Ensemble selon l'une des revendications précédentes, **caractérisé en ce que** le véhicule (10) est la remorque d'un semi-remorque.

6. Ensemble selon la revendication 5, **caractérisé en ce que** la remorque (10) du semi-remorque possède un châssis porteur (16) qui forme la table de levage (26) ou qui reprend cette dernière.
